## Europäisches Patentamt
## European Patent Office
## Office européen des brevets

(19)

(11) Veröffentlichungsnummer: **0 324 990**
**B1**

(12) **EUROPÄISCHE PATENTSCHRIFT**

(45) Veröffentlichungstag der Patentschrift: **23.01.91**

(51) Int. Cl.⁵: **B 60 T 7/20**

(21) Anmeldenummer: **88121919.0**

(22) Anmeldetag: **31.12.88**

(54) **Auflaufbremsanlage für Anhänger.**

(30) Priorität: **19.01.88 DE 3801320**

(43) Veröffentlichungstag der Anmeldung:
**26.07.89 Patentblatt 89/30**

(45) Bekanntmachung des Hinweises auf die
Patenterteilung:
**23.01.91 Patentblatt 91/04**

(84) Benannte Vertragsstaaten:
**AT DE IT NL**

(56) Entgegenhaltungen:
**DE-A-3 210 322**
**DE-B-2 058 566**
**DE-U-7 143 723**

(73) Patentinhaber: **Bergische Achsenfabrik Fr. Kotz**
**& Söhne**
**Am Ohlerhammer**
**D-5276 Wiehl 1 (DE)**

(72) Erfinder: **Johanns, Karl-Heinz**
**Langewiese 1**
**D-5223 Nümbrecht (DE)**

(74) Vertreter: **Patentanwälte Dipl.-Ing. Alex Stenger**
**Dipl.-Ing. Wolfram Watzke Dipl.-Ing. Heinz J.**
**Ring**
**Kaiser-Friedrich-Ring 70**
**D-4000 Düsseldorf 11 (DE)**

Courier Press, Leamington Spa, England.

## Beschreibung

Die Erfindung betrifft eine Auflaufbremsanlage für Anhänger mit einer um eine waagerechte Achse am Fahrgestell des Anhängers verschwenkbaren Deichsel, mit einer Trommelbremse, deren durch Spreizelemente betätigbaren und mit einer Bremstrommel zusammenwirkenden Bremsbacken bei Rückwärtsfahrt aus ihrer Reibschlußlage ausweichen können, mit einer Auflaufbremse, die mittels eines Auflaufgestänges auf die Spreizelemente der Trommelbremse wirkt, sowie mit einer manuell betätigbaren Feststellbremse, die mittels eines Betätigungsgestänges ebenfalls auf die Spreizelemente der Trommelbremse wirkt, wobei das Betätigungsgestänge einen den Ausweichweg der Bremsbacken bei Rückwärtsfahrt ausgleichenden Federspeicher aufweist. Dies entspricht gemäß Dokument DE—A1-32 10 322 dem oberbegriff des Anspruchs 1.

Eine derartige Auflaufbremsanlage für Anhänger ist auch aus der DE—B—2 058 566 bekannt. Sie besteht aus einer Auflaufbremse sowie aus einer manuell betätigbaren Feststellbremse, die jeweils mit einer Trommelbremse zusammenwirken. Diese weist Bremsbacken auf, die durch Spreizelemente betätigbar sind und mit einer Bremstrommel der Trommelbremse zusammenwirken. Bei Rückwärtsfahrt des Anhängers können die Bremsbacken aus ihrer Reibschlußlage mit der Bremstrommel ausweichen. Die Auflaufbremse besitzt ein Auflaufgestänge, das auf die Spreizelemente der Trommelbremse wirkt und somit die Bremsbacken der Trommelbremse betätigt. Die Feststellbremse besitzt ebenfalls ein Betätigungsgestänge, das ebenso wie das Auflaufgestänge der Auflaufbremse auf die Spreizelemente und damit auf die Bremsbacken der Trommelbremse wirkt. Dieses Betätigungsgestänge weist einen Federspeicher auf, der den Ausweichweg der Bremsbacken ausgleicht, wenn diese bei Rückwärtsfahrt aus ihrer Reibschlußlage mit der Bremstrommel ausweichen und damit die Bremswirkung aufheben.

Der Federspeicher der bekannten Auflaufbremsanlage weist ein Rohr auf, das mit seinem einen Ende über einen Bowdenzug mit der Trommelbremse in Verbindung steht. Innerhalb des Rohres ist eine den eigentlichen Federspeicher bildende Druckfeder angeordnet. Diese Druckfeder wird durch eine Stange durchragt, die an ihrem hinteren Ende mit einem Mitnehmer für die Druckfeder versehen ist. Die Stange ragt durch das Rohr hindurch nach vorne und ist in einem Schlitz eines Bolzens längsverschiebbar geführt, wobei dieser Bolzen am unteren Ende eines Handbremshebels angeordnet ist. Durch Betätigen dieses Handbremshebels wird die Stange derart bewegt, daß deren Mitnehmer die Feder innerhalb des Rohres zusammendrückt, da sich diese am vorderen Ende des Rohres an diesem abstützt. Durch diese Druckspannung innerhalb der Feder wird das Rohr und damit der Bowdenzug entsprechend mitbewegt, so daß die Spreizelemente der Trommelbremse betätigt und damit die Bremsbacken in Reibschluß mit der Bremstrommel gebracht werden. Bei einer Rückwärtsfahrt des Anhängers bei angezogener Feststellbremse, wenn die Bremsbacken aus ihrer Reibschlußlage ausweichen, bringt die unter Spannung stehende Druckfeder die Bremsbacken zur Anlage an die Bremstrommel, so daß eine weitere Rückwärtsfahrt verhindert wird.

Der bekannte Federspeicher hat den Nachteil, daß er relativ aufwendig ist und aus vielen Einzelteilen besteht. Vor allem aber kann die bekannte Auflaufbremsanlage nicht ohne weiteres auf einen Anhänger übertragen werden, der mit einer verschwenkbaren Deichsel versehen ist und bei der die Höheneinstellung der Deichsel mit Betätigung des Handbremshebels erfolgt.

Eine ähnliche Auflaufbremsanlage für Anhänger ist aus dem DE—U—71 43 723 bekannt. Statt einer Druckfeder sieht diese jedoch zwei zueinander parallel angeordnete Zugfedern auf. Auch diese bekannte Auflaufbremsanlage hat den Nachteil, daß sie nicht ohne weiteres auf einen Anhänger übertragen werden kann, der mit einer verschwenkbaren Deichsel versehen ist und wobei die Höheneinstellung der Deichsel mit Betätigung des Handbremshebels erfolgt.

Davon ausgehend liegt der Erfindung die Aufgabe zugrunde, eine Auflaufbremsanlage zu schaffen, die auch für Anhänger mit einer höhenverschwenkbaren Deichsel eingesetzt werden kann und die Höheneinstellung mit dem Handbremshebel erfolgt.

Als technische Lösung werden mit der Erfindung die Kennzeichnenden Merkmale des Anspruchs 1 vorgeschlagen.

Eine nach dieser technischen Lehre ausgebildete Auflaufbremsanlage für Anhänger hat den Vorteil, daß diese problemlos für Anhänger eingesetzt werden kann, die eine höhenverschwenkbare Deichsel aufweist, wobei die Höheneinstellung mit dem Handbremshebel erfolgt. Durch die erfindungsgemäße Ausbildung der Auflaufbremsanlage ist nämlich der Federspeicher nicht unmittelbar an der Deichsel, sondern am feststehenden Fahrgestell des Anhängers angeordnet. Diese Entkopplung des Federspeichers von der Deichsel ermöglicht deren höhenverschwenkbare Anordnung am Fahrgestell des Anhängers.

Besondere Ausführungsarten der Erfindung sind in den abhängigen Ansprüchen hervorgehoben.

Weitere Einzelheiten und Vorteile ergeben sich aus der nachfolgenden Beschreibung der zugehörigen Zeichnungen, in den zwei Ausführungsbeispiele einer erfindungsgemäßen Auflaufbremsanlage für Anhänger mit einer höhenverschwenkbaren Deichsel schematisch dargestellt sind. In den Zeichnungen zeigt:

Fig. 1 eine Draufsicht auf den Anhänger;

Fig. 2 einen Schnitt entlang der Linie II—II in Fig. 1 zur Darstellung der Auflaufbremse;

Fig. 3 eine entsprechende Seitenansicht in Richtung des Pfeiles III in Fig. 1 zur Darstellung der Feststellbremse;

Fig. 4 eine kombinierte Seiten- und Draufsicht auf die Feststellbremse in Fig. 3 bei Vorwärtsabbremsung;

Fig. 5 eine Darstellung entsprechend Fig. 4, jedoch bei Rückwärtsabbremsung;

Fig. 6 eine Darstellung einer alternativen Ausführungsform einer Feststellbremse einer Auflaufbremsanlage für Anhänger unter Verwendung einer Druckfeder als Federspeicher;

Fig. 7 eine vergrößerte Darstellung des Federspeichers in Fig. 6.

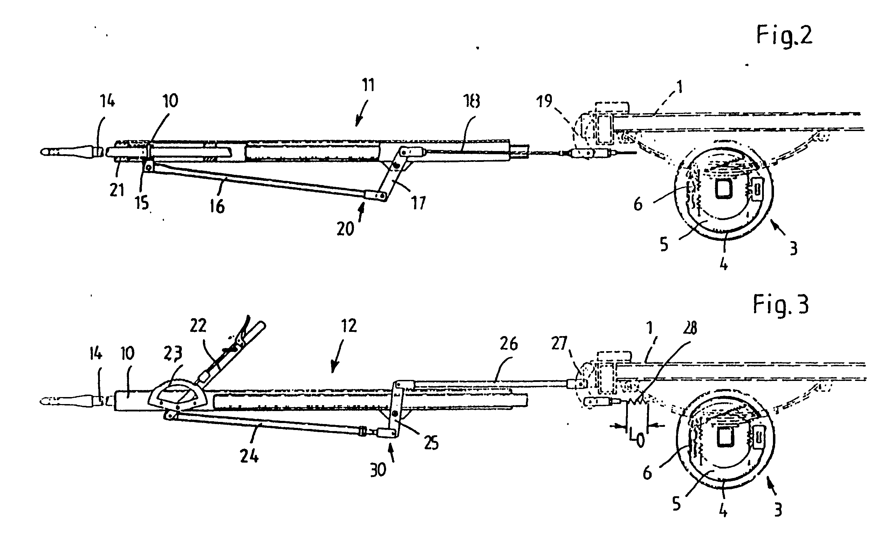

Der dargestellte Anhänger weist ein gestrichelt gezeichnetes Fahrgestell 1 auf, an dem eine Achse 2 für die Räder des Anhängers angebracht ist. An den beiden Enden dieser Achse 2 ist jeweils eine Trommelbremse 3 angeordnet, die in ihrem grundsätzlichen Aufbau in den Fig. 2 und 3 zu erkennen ist. So besteht die Trommelbremse 3 aus einer äußeren Bremstrommel 4, in der zwei Bremsbacken 5 verschwenkbar gelagert sind. Mittels eines Spreizelementes 6 können die Bremsbacken 5 nach außen verschwenkt und in Reibschluß mit der Bremstrommel 4 gebracht werden. Dies erfolgt mittels eines mit den Spreizelementen 6 zusammenwirkenden Hebelgestänges 7.

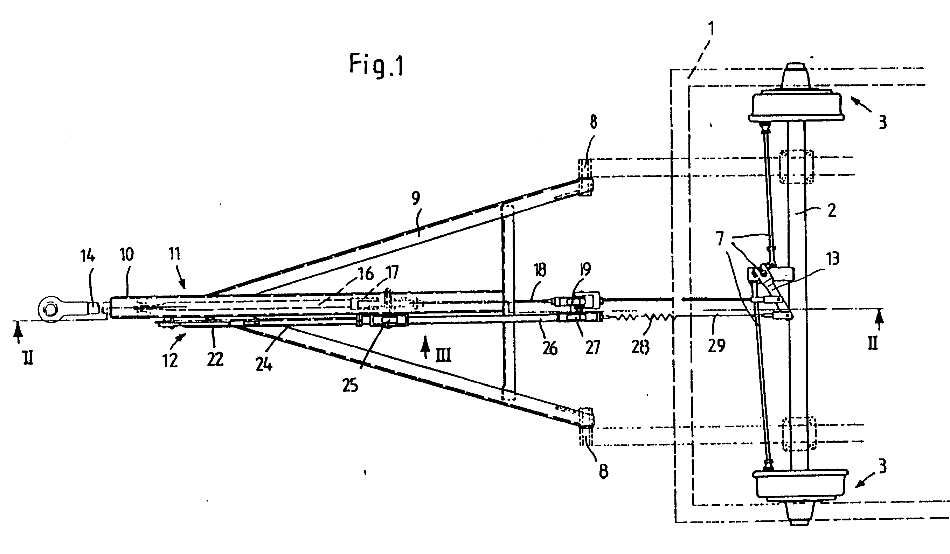

Am vorderen Ende des Fahrgestells 1 ist in Schwenklagern 8 eine höhenverstellbare Deichsel 9 gelagert, die die Form eines "A" mit einem Mittelrohr 10 aufweist. Wie insbesondere in Fig. 1 sowie in den Fig. 2 und 3 zu erkennen ist, ist die Deichsel mit einer Auflaufbremse 11 (Fig. 2) sowie mit einer parallel dazu angeordneten Feststellbremse 12 (Fig. 3) ausgestattet, die jeweils auf das Hebelgestänge 7 für die Trommelbremse 3 wirken, und zwar auf einen um eine vertikale Achse verschenkbaren Verschwenkhebel 13.

Die Auflaufbremse 11 weist eine im Mittelrohr 10 der Deichsel 9 verschiebbar angeordnete Zugstange 14 auf. An einem Ringbund 15 dieser Zugstange 14 ist eine erste Verbindungsstange 16 angelenkt. Mit ihrem anderen Ende ist diese erste Verbindungsstange 16 am einen Arm eines zweiarmigen Übertragungshebels 17 angelenkt, der hinwiederum an der Deichsel 9 verschwenkbar gelagert ist. Am anderen Arm dieses zweiarmigen Übertragungshebels 17 ist ein Seilzug 18 befestigt. Dieser ist mit seinem anderen Ende am Verschwenkhebel 13 des Hebelgestänges 7 angelenkt. An einer mittleren Stelle des Seilzuges 18 ist dieser am freien Ende eines einarmigen Hebelarmes 19 gelagert, der mit seinem anderen Ende am Fahrgestell 1 des Anhängers ebenfalls verschwenkbar angelenkt ist. Die Verbindungsstange 16, der zweiarmige Übertragungshebel 17 sowie der Seilzug 18 bilden insgesamt zusammen mit der Zugstange 14 ein Auflaufgestänge 20 zum Betätigen der Trommelbremsen 3. Die Zugstange 14 ist dabei in einem Ringflansch 21 im Mittelrohr 10 geführt.

Die Feststellbremse 12 ist ähnlich aufgebaut wie die Auflaufbremse 11. An der Deichsel 9 ist ein Handhebel 22 verschwenkbar gelagert, der in bekannter Weise mit einer Raste 23 zusammenwirkt, um so den Handhebel 22 in der gewünschten Position zu fixieren. Am unteren Ende des Handhebels 22 greift eine erste Verbindungsstange 24 an, die teleskopierbar ausgebildet ist. Das andere Ende dieser ersten Verbindungsstange 24 greift am einen Arm eines an der Deichsel 9 verschwenkbar gelagerten Übertragungshebels 25 an. An dessen anderem Arm greift eine zweite Verbindungsstange 26 an, die mit ihrem anderen Ende hinwiederum an einem bogenförmig ausgebildeten einarmigen Hebelarm 27 angelenkt ist. Dieser Hebelarm 27 ist am Fahrgestell 1 des Anhängers verschwenkbar gelagert. Am äußeren Ende des Hebelarmes 27 greift eine Zugfeder 28 an, die über einen Seilzug 29 mit dem Verschwenkhebel 13 des Hebelgestänges 7 für die Trommelbremsen 3 in Verbindung steht. Die erste Verbindungsstange 24, der zweiarmige Übertragungshebel 25, die zweite Verbindungsstange 26, der Hebelarm 27 sowie der Seilzug 29 mit der Zugfeder 28 bilden insgesamt ein durch den Handhebel 22 betätigbares Betätigungsgestänge 30 für die Feststellbremse 12.

Die Funktions- und Wirkungsweise der Auflaufbremsanlage ist wie folgt:

Die Auflaufbremse 11 arbeitet nach dem herkömmlichen Prinzip. In der in Fig. 2 dargestellten Betriebsstellung befindet sich die Zugstange 14 in einer ausgezogenen Lage und das Spreizelement 6 der Trommelbremse 3 wird nicht beaufschlagt. Erst wenn sich die Zugstange 14 und das Mittelrohr 10 der Deichsel 9 ineinanderschieben, wird das Auflaufgestänge 20 derart betätigt, daß der Verschwenkhebel 13 des Hebelgestänges 7 für die Trommelbremsen 3 so im Uhrzeigersinn verschwenkt wird, daß die Bremsbacken 5 an der Bremstrommel 4 zur Anlage kommen und den Anhänger abbremsen.

Die Feststellbremse 12 befindet sich in der Betriebsstellung des Anhängers, d.h. wenn dieser von einem Fahrzeug gezogen wird, in der in Fig. 3 dargestellten Lage, bei der der Handhebel 22 ganz nach rechts verschwenkt ist. Der Verschwenkhebel 13 des Hebelgestänges 7 für die Trommelsbremse 3 befindet sich dabei in der Ausgangsstellung, bei der die Bremsbacken 5 außer Eingriff mit der Bremstrommel 4 sind. Diese Stellung des Verschwenkhebels 13 ist in Fig. 1 zu erkennen. Die Zugfeder 28 besitzt dabei die Länge $L_0$.

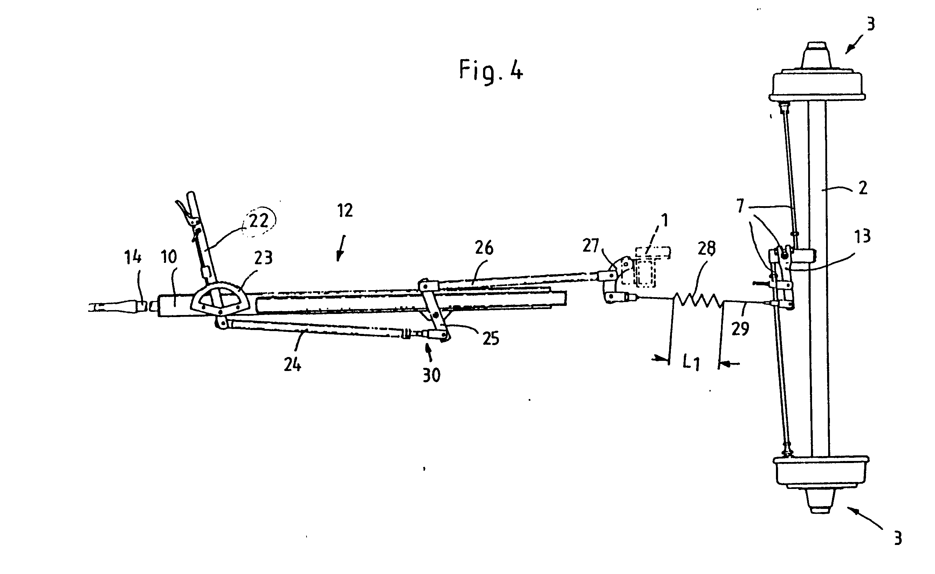

Soll die Feststellbremse 12 betätigt werden, wird der Handhebel 22 entgegen dem Uhrzeigersinn verschwenkt, wie dies in Fig. 4 zu erkennen ist. Gleichzeitig wird das Betätigungsgestänge 30 derart betätigt, daß das hintere Ende der zweiten Verbindungsstange 26 den Hebelarm 27 in Richtung Uhrzeigersinn dreht. Da die Zugfeder 28 ebenfalls an diesem Hebelarm 27 angreift, wird über den Seilzug 29 der Verschwenkhebel 13 im Uhrzeigersinn gedreht, so daß die Spreizelemente 6 die Bremsbacken 5 nach außen drücken, so daß diese an der Bremstrommel zur Anlage kommen und die Bremswirkung eintritt. Gleichzeitig wird die Zugfeder 28 auf die länge $L_1$ verlängert, und zwar bezüglich zur Länge $L_0$ um den maximalen Ausweichweg der Radbremse.

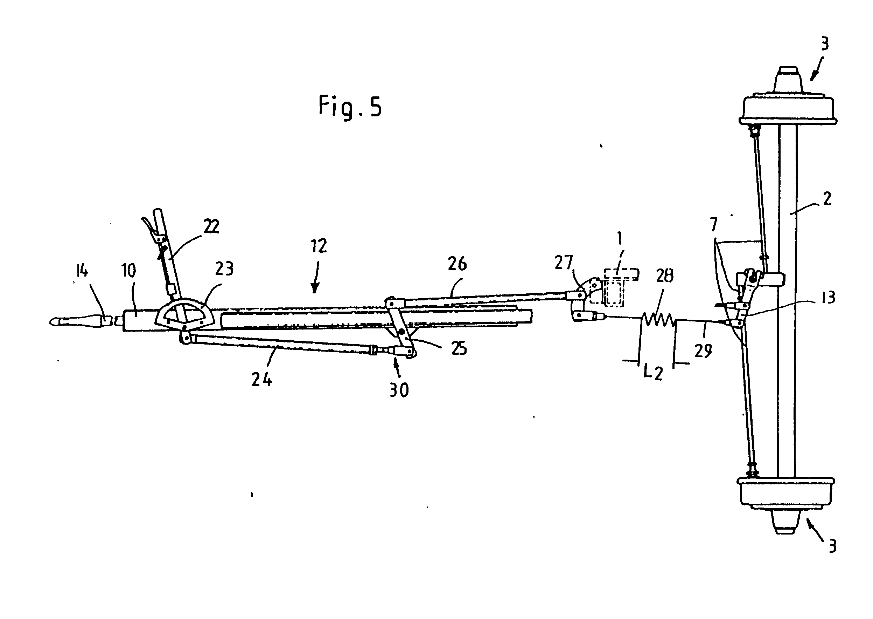

Wie eingangs erwähnt, sind die Trommelbremsen 3 jeweils mit einer Rückfahrautomatik ausgestattet. Diese bewirkt, daß bei einer geringfügigen Bewegung des Anhängers nach hinten der Reibschluß zwischen den Bremsbacken 5 und der Bremstrommel 4 aufgehoben wird, wobei die Bremsbacken 5 geringfügig nach innen ausweichen. Die Bremswirkung durch die angezogene Feststellbremse 12 ist somit aufgehoben, so daß trotz angezogener Feststellbremse 12 der Anhänger rückwärts weiterrollen würde. Um die Bremswirkung jedoch wiederherzustellen, ist im Betätigungsgestänge 30 für die Feststellbremse 12 ein Federspeicher in Form der Zugfeder 28 vorgesehen. Diese zieht an dem Verschwenkhebel 13 und verschwenkt diesen derart weiter, bis die Bremsbacken 5 wieder an der Bremstrommel 4 der Trommelbremse 3 zur Anlage kommen und die Bremswirkung wiederhergestellt ist. Diese Situation ist in Fig. 5 dargestellt, wobei gleichzeitig zu erkennen ist, daß sich die Zugfeder 28 auf die Länge $L_2$ verkürzt hat, und zwar im Vergleich zur Länge $L_1$ um den Ausweichweg der Radbremse. Grund

Grundsätzlich wäre es zwar auch denkbar, daß durch das Gewicht der Deichsel 9 der Ausweichweg der Bremsbacken 5 bei Rückwärtsfahrt ausgeglichen wird, so daß sich die Deichsel 9 allmählich nach unten bewegen würde, doch hat die Reibung im Schwenklager 8 der Deichsel 9 eine Zeitverzögerung zur Folge, die bewirkt, daß zuerst die Zugfeder die Ausweichbewegung der Bremsbacken 5 ausgleicht, bevor die Deichsel 9 absinken kann.

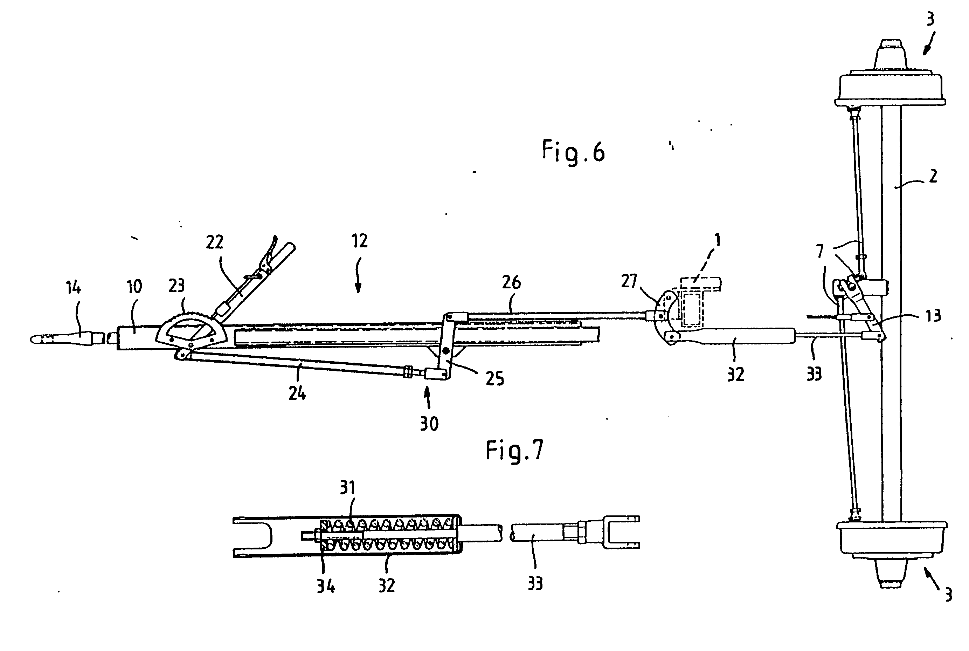

Die in den Fig. 6 und 7 dargestellte alternative Ausführungsform unterscheidet sich von der in den Fig. 1 bis 5 dargestellten Ausführungsform durch die Ausbildung des Federspeichers der Feststellbremse 12. Statt der Verwendung einer Zugfeder 28 ist hier eine Druckfeder 31 vorgesehen. Diese ist in einem rohrförmigen Gehäuse 32 angeordnet, welches mit seinem in der Zeichnung linken Ende verschwenkbar am Hebelarm 27 angelenkt ist. Eine am Verschwenkhebel 13 angelenkte Stange 33 ragt mit ihrem freien Ende durch eine stirnseitige Öffnung im rohrförmigen Gehäuse 32 in dieses hinein, wobei diese Stange 33 in der Achse der Druckfeder 31 diese durchragend verläuft. Auf den freien Ende der Stange 33 ist ein Mitnehmer 34 angeordnet, zwischen dem und der Stirnseite des Gehäuses 32 sich die Druckfeder 31 abstützt.

Die Funktionsweise dieses Federspeichers entspricht exakt der bei der Zugfeder 28 im ersten Ausführungsbeispiel, d.h. das Gestänge zwischen dem Hebelarm 27 und dem Verschwenkhebel 13 steht unter Zugspannung. Sobald der Handhebel 22 in die Bremsstellung verschwenkt wird, wie dies Beispielsweise in den Fig. 4 und 5 des ersten Ausführungsbeispieles dargestellt ist, wird die Druckfeder 31 zusammengepreßt, da die Stange 33 aus dem Gehäuse 32 heraus ausgefahren wird.

Bezugzeichenliste

1  Fahrgestell
2  Achse
3  Trommelbremse
4  Bremstrommel
5  Bremsbacke
6  Spreizelement
7  Hebelgestänge
8  Schwenklager
9  Deichsel
10  Mittelrohr
11  Auflaufbremse
12  Feststellbremse
13  Verschwenkhebel
14  Zugstange
15  Ringbund
16  Verbindungsstange
17  Übertragungshebel
18  Seilzug
19  Hebelarm
20  Auflaufgestänge
21  Ringflansch
22  Handhebel
23  Raste
24  Verbindungsstange
25  Übertragungshebel
26  Verbindungsstange
27  Hebelarm
28  Zugfeder
29  Seilzug
30  Betätigungsgestänge
31  Druckfeder
32  Gehäuse
33  Stange
34  Mitnehmer
$L_0$  Länge
$L_1$  Länge
$L_2$  Länge

## Patentansprüche

1. Auflaufbremsanlage für Anhänger mit einer um eine waagerechte Achse am Fahrgestell (1) des Anhängers verschwenkbaren Deichsel (9), mit einer Trommelbremse (3), deren durch Spreizelemente (6) betätigbaren und mit einer Bremstrommel (4) zusammenwirkenden Bremsbacken (5) bei Rückwärtsfahrt aus ihrer Reibschlußlage ausweichen können, mit einer Auflaufbremse (11), die mittels eines Auflaufgestänges (20) auf die Spreizelemente (6) der Trommelbremse (3) wirkt, sowie mit einer manuell betätigbaren Feststellbremse (12), die mittels eines Betätigungsgestänges (30) ebenfalls auf die Spreizelemente (6) der Trommelbremse (3) wirkt, wobei das Betätigungsgestänge (30) einen den Ausweichweg der Bremsbacken (5) bei Rückwärtsfahrt ausgleichenden Federspeicher aufweist, dadurch gekennzeichnet, daß das Betätigungsgestänge (30) für die Feststellbremse (12) einen am Fahrgestell (1) des Anhängers verschwenkbar angelenkten Hebelarm (27) aufweist, daß der Federspeicher eine bei betätigter Feststellbremse (12) auseinandergezogene und unter Zugspannung stehende Zugfeder (28) ist, die unmittelbar oder mittelbar am Hebelarm (27) angreifend zwischen diesem und der Trommelbremse (3) angeordnet ist, und daß das restliche Betätigungsgestänge (30) ebenfalls am Hebelarm (27) angreifend zwischen diesem und der verschwenkbaren Deichsel (9) angeordnet ist.

2. Auflaufbremse nach Anspruch 1, dadurch gekennzeichnet, daß der Hebelarm (27) ein bogenförmig ausgebildeter einarmiger Hebelarm (27) ist.

3. Auflaufbremsanlage nach Anspruch 1 oder 2, dadurch gekennzeichnet, daß das restliche Betätigungsgestänge (30) an der Deichsel (9) aus einer mit einem an der Deichsel (9) angelenkten Handhebel (22) betätigbaren ersten Verbindungsstange (24), einem ebenfalls an der Deichsel (9) angelenkten zweiarmigen Übertragungshebel (25) sowie einer zweiten Verbindungsstange (26) zu dem am Fahrgestell (1) angelenkten Hebelarm (27) besteht.

4. Auflaufbremsanlage nach Anspruch 3, dadurch gekennzeichnet, daß die erste Verbindungsstange (24) teleskopierbar ist.

5. Auflaufbremsanlage nach einem der Ansprüche 1 bis 4, dadurch gekennzeichnet, daß das Auflaufgestänge (20) für die Auflaufbremse (11) einen am Fahrgestell (1) des Anhängers verschwenkbar angelenkten Hebelarm (19) aufweist.

6. Auflaufbremsanlage nach einem der Ansprüche 1 bis 5, dadurch gekennzeichnet, daß der Federspeicher eine in einem rohrartigen Gehäuse (32) des Betätigungsgestänges (30) angeordnete sowie von einer einen Mitnehmer (34) aufweisende Stange (33) des Betätigungsgestänges (30) betätigbare, bei betätigter Feststellbremse (12) durch den Mitnehmer (34) zusammengedrückte und unter Druckspannung stehende Druckfeder (31) ist.

## Revendications

1. Installation de frein d'inertie pour remorques comportant un timon (9) pivotant autour d'un axe horizontal sur le châssis (1) de la remorque, un frein à tambour (3) dont les mâchoires de frein (5) actionnées par des éléments d'écartement (6) et coopérant avec un tambour de frein (4), peuvent se déplacer hors de leur position d'action par frottement lors de la marche arrière, un frein d'inertie (11) qui agit au moyen d'une timonerie d'inertie (20) sur les éléments d'écartement (6) du frein à tambour (3), comportant aussi un frein d'arrêt (12) à commande manuelle qui, au moyen d'une timonerie de manoeuvre (30), agit aussi sur les éléments d'écartement (6) du frein à tambour (3), la timonerie de manoeuvre (30) comportant un accumulateur de force à ressort qui compense la course de déplacement des mâchoires de frein (5) lors de la marche arrière, caractérisé en ce que la timonerie de manoeuvre (30) du frein d'arrêt (12) comporte un bras de levier (27) articulé pour pivoter sur le châssis (1) de la remorque, que l'accumulateur de force à ressort est un ressort de traction (28) étiré et sous tension lorsque le frein d'arrêt (12) est actionné, ce ressort étant disposé entre le bras de levier (27) et le tambour de frein (3) en agissant indirectement ou directement sur ce bras de levier, et que la partie restante de la tringlerie de manoeuvre (30) est disposée entre le bras de levier (27) et le timon pivotant (9) en agissant aussi sur ce bras de levier.

2. Frein d'inertie selon la revendication 1, caractérisé en ce que le bras de levier (27) est un levier à bras unique (27) réalisé en forme d'arc.

3. Installation de frein d'inertie selon la revendication 1 ou 2, caractérisée en ce que la partie restante de la timonerie de manoeuvre (30) reliée au timon (9) se compose d'une première tige de liaison (24) actionnée par un levier à main (22) articulé sur le timon (9), d'un levier de transmission (25) à deux bras également articulé sur le timon (9) ainsi que d'une seconde tige de liaison (26) allant au bras de levier (27) articulé sur le châssis (1).

4. Installation de frein d'inertie selon la revendication 3, caractérisée en ce que la première tige de liaison (24) est télescopique.

5. Installation de frein d'inertie selon l'une des revendications 1 à 4, caractérisée en ce que la timonerie d'inertie (20) du frein d'inertie (11) comporte un bras de levier (19) articulé sur le châssis (1) de la remorque.

6. Installation de frein d'inertie selon l'une des revendications 1 à 5, caractérisée en ce que l'accumulateur de force à ressort est un ressort de compression (31) disposé dans un boîtier tubulaire (32) de la timonerie de manoeuvre (30) en pouvant être actionné par une tige (33) comportant un organe d'entraînement (34) et appartenant à la timonerie de manoeuvre (30), ce ressort étant comprimé et mis sous contrainte de compression lorsque le frein d'arrêt (12) est actionné.

## Claims

1. An overrun brake system for trailers, the system having: a drawbar (9) connected to the trailer chassis (1) for pivoting around a horizontal axis; a drum brake (3) whose brake shoes (5) are operable by expanding elements (6), co-operate with a brake drum and can disengage from their position of frictional engagement in reverse travel; an overrun brake (11) acting by way of overrun linkage (20) on the brake drum expanding elements (6); and a manually operated parking brake (12) which by way of an actuating linkage (30), also acts on the brake drum expanding elements (6), the linkage (30) having spring means compensating for the disengaging movement of the brake shoes (5) in reverse travel, characterised in that the actuating linkage (30) for the parking brake (12) has a lever arm (27) pivotally connected to the trailer chassis (1), the spring means are in the form of a tension spring (28) which is in the expanded state and in tension with the parking brake (12) applied and is so disposed between the drum brake (3) and the lever arm (27) as to be act directly or indirectly thereon, and the remainder of the actuating linkage (30) is also so disposed between the pivotable drawbar (9) and the lever arm (27) as to act thereon.

2. An overrun brake according to claim 1, characterised in that the lever arm is an arcuate single-armed lever arm (27).

3. An overrun brake system according to claim 1 or 2, characterised in that the remainder of the actuating linkage (30) on the drawbar (9) comprises: a first connecting rod (24) operable by a lever (22) pivoted to the drawbar (9); a two-armed transmission lever (25) also pivoted to the drawbar (9); and a second connecting rod (26) which extends to the lever arm (27) pivoted to the chassis (1).

4. An overrun brake system according to claim 3, characterised in that the first connecting rod (24) is telescopic.

5. An overrun brake system according to any of claims 1 to 4, characterised in that the overrun linkage (20) for the overrun brake (11) has a lever arm (19) pivotally connected to the trailer chassis (1).

6. An overrun brake system according to any of claims 1 to 5, characterised in that the spring means take the form of a compression spring (31) which is disposed in a tubular casing (32) of the actuating linkage (30), is operable by a rod (33) thereof, the latter rod having an entraining abutment (34), and is pressed together and placed in compression by the entraining abutment (34) with the parking brake (12) applied.

Fig.1

1

Fig.2

Fig. 3

EP 0 324 990 B1

Fig. 4

Fig.5

Fig.6

Fig.7

EP 0 324 990 B1